# EUROPÄISCHE PATENTANMELDUNG

(11) **EP 1 189 099 A2**
(43) Veröffentlichungstag der Anmeldung: **20.03.2002**
(21) Anmeldenummer: 01000444.8
(22) Anmeldetag: 12.09.2001
(51) Int. Cl.: G02F 1/13357

(54) **Flüssigkristallbildschirm mit Hintergrundbeleuchtung**

(30) Priorität: 14.09.2000 DE 10045407
(71) Anmelder: Philips Corporate Intellectual Property GmbH, 52064 Aachen (DE); Koninklijke Philips Electronics N.V., 5621 BA Eindhoven (NL)
(72) Erfinder: Dirscherl, Jürgen, Philips Corporate Int.Prop.GmbH, 52064 Aachen (DE); Klein, Markus, Philips Corporate Int.Prop.GmbH, 52064 Aachen (DE); Nikol, Hans, c/o Philips Corporate Int.Prop.GmbH, 52064 Aachen (DE); Snijkers, Rob, c/o Philips Corporate Int.Prop.GmbH, 52064 Aachen (DE)
(74) Vertreter: Volmer, Georg, Dipl.-Ing.

(57) **Zusammenfassung**

Flüssigkristallbildschirm, ausgerüstet mit einer Flüssigkristallschicht, mit einem ersten und einem zweiten transparenten Substrat, die die Flüssigkristallschicht flankieren, mit Mitteln zur Beeinflussung des Transmissionszustandes der Flüssigkristallschicht, mit einer Leuchtstoffschicht, die mindestens einen Leuchtstoff in Form von Leuchtstoffpunkten enthält, auf dem zweiten Substrat, mit einem dritten Substrat, das gegenüber dem zweiten Substrat angeordnet ist und mit dem zweiten Substrat zu einem gasdichten Gasentladungsgefäß, gefüllt mit einem Füllgas, verbunden ist und mit Mitteln zur Zündung und Aufrechterhaltung einer dielektrisch behinderten Entladung in dem Gasentladungsgefäß.

## Beschreibung

Die Erfindung betrifft einen Flüssigkristallfarbbildschirm, ausgerüstet mit einer Flüssigkristallschicht, zwei parallelen Substraten, die die Flüssigkristallschicht flankieren, mit Mitteln zur Beeinflussung des Transmissionszustandes der Flüssigkristallschicht, mit einer Leuchtstoffschicht, die mindestens einen Leuchtstoff enthält, und mit einer Hintergrundbeleuchtung.

In Flüssigkristallbildschirmen wird die Tatsache ausgenutzt, dass sich die Molekülorientierung einiger Klassen von Flüssigkristallen durch Anlegen eines elektrischen Feldes so steuern läßt, dass von außen auffallendes linear polarisiertes licht in seiner Polarisationsrichtung beeinflusst wird. Die verschiedenen Klassen von Flüssigkristallen umfassen nematische, cholesterische und verschiedenen Arten smektischer Phasen, die jeweils durch eine unterschiedliche räumliche Anordnung der Moleküle gekennzeichnet sind. Beispielsweise enthalten die weit verbreiteten TN-Flüssigkristallbildschirme (TN = twisted nematic) nematische Flüssigkristalle.

Ein konventionellen TN-Flüssigkristallbildschirm besteht üblicherweise aus zwei Glasplatten, die jeweils an ihren Innenseiten mit einer transparenten Elektrode aus Indium-Zinn-Oxid (ITO) beschichtet sind. Dazwischen ist eine Schicht, die die Flüssigkristalle enthält, angeordnet. Den nematischen Flüssigkristallmolekülen wird durch Orientierungsschichten auf den Glasplatten eine um 90° zwischen beiden Glasplatten verdrehte Randorientierung aufgezwungen. Dadurch stellt sich in der Flüssigkristallschicht eine 90°-Helix ein. Gekreuzte Polarisatoren auf den Außenflächen der Glasplatten und eine flächige Hintergrundbeleuchtung vervollständigen den Bildschirm. Solange an den beiden ITO-Elektroden keine elektrische Spannung anliegt, kann das vom ersten Polarisator linear polarisierte Licht der Hintergrundbeleuchtung der 90°-Verdrehung der Flüssigkristallmoleküle folgen und anschließend den zweiten Polarisator passieren; der Bildschirm erscheint hell. Beim Anlegen einer genügend hohen Spannung wird durch die elektrische Anisotropie der Flüssigkristallmoleküle die Helix aufgehoben und die Polarisationsrichtung bleibt unbeeinflusst; das polarisierte Licht wird am zweiten Polarisator geblockt und die Zelle erscheint dunkel.

Ein komplettes Bild wird aus einer Vielzahl von einzelnen Bildelementen zusammengesetzt, die jeweils über eine Matrix angesteuert werden und quasi wie Lichtventile wirken. In farbigen Flüssigkristallbildschirmen setzt sich ein komplettes Bildelement wie in CRT-Bildschirmen aus drei, jeweils einzeln angesteuerten Bildpunkten für die Farben Rot, Blau, Grün zusammen. Die Farbwiedergabe erfolgt in konventionellen Flüssigkristallbildschirmen durch Mosaikfarbfilter, die auf die frontseitige Glasplatte aufgedruckt sind.

Eine Nachteil der konventionellen Flüssigkristallfarbbildschirme mit Farbfiltern ist es, dass der Bildschirm nur unter bekimmten Blickwinkeln betrachtet werden kann, dass eine externe Beleuchtung notwendig ist und dass Farbsättigung Leuchtkraft und Helligkeit Werte haben, die deutlich unter denen von CRT-Bildschirmen liegen.

Höhere Leuchtkraft und einen größeren Betrachtungswinkel haben Flüssigkristallfarbbildschirme, die eine Leuchtstoffschicht umfassen. Beispielsweise ist aus US 4 822 144 ein Flüssigkristallfarbbildschirm bekannt, der im Transmissionsmodus betrieben wird und auf einer Kombination von Flüssigkristallschaltelementen und einer Leuchtstoffschicht beruht, wobei die Leuchtstoffschicht von einer UV-Lichtquelle angeregt wird und die Helligkeit des Bildschirms durch ein Interferenzfilter zwischen Lichtquelle und Leuchtstoffschicht erhöht wird. Leuchtstoffschicht und UV-Quelle können an zwei, voneinander abgewandten Seiten der Flüssigkristallschaltelemente liegen. Als UV-Quelle kann eine Quecksilbergasentladungslampe, gewählt werden.

In einem Flüssigkristallbildschirm mit einer Hintergrundbeleuchtung mittels einer Quecksilbergasentladungslampe wird jedoch die erzeugte UV-Strahlung von dem Material des Lampenkolbens, der Flüssigkristallschicht und den die Flüssigkristallschicht flankierenden Substraten absorbiert, bevor sie die Leuchtstoffschicht erreicht.

Aus US 5,121,233 ist ein Flüssigkristallfarbbildschirm mit einer Flüssigkristallzelle und einer Hintergrundbeleuchtung bekannt, die aus einer Elektronenstrahlröhre besteht, die mit einer Vielzahl von Kathoden bestückt ist, bekannt. Die Leuchtstoffschicht ist in der Elektronenstrahlröhre angeordnet und besteht aus kathodolumineszenten Leuchtstoffen mit Pixeln, die selektiv angeregt werden.

Es ist ein Nachteil eines Flüssigkristallfarbbildschirms mit einer separaten Hintergrundbeleuchtung aus einer Elektronenstrahlröhre mit mehreren Kathoden, dass der Abstand zwischen der Leuchtstoffschicht und den Flüssigkristallschaltelementen groß ist im Vergleich zu den lateralen Abmessungen der Pixel. Deshalb breitet sich das in der Leuchtstoffschicht erzeugte licht über die vorgesehenen Gebiete hinaus aus und man erhält eine Falschlichtbestrahlung der benachbarten Flüssigkristallschaltelemente.

Es ist eine Aufgabe der vorliegenden Erfindung, einen Flüssigkristallbildschirm mit verbesserter Hintergrundbeleuchtung zu schaffen.

Erfindungsgemäß wird die Aufgabe gelöst durch einen Flüssigkristallbildschirm, ausgerüstet mit einer Flüssigkristallschicht, mit einem ersten und einem zweiten transparenten Substrat, die die Flüssigkristallschicht flankieren, mit Mitteln zur Beeinflussung des Transmissionszustandes der Flüssigkristallschicht, mit einer Leuchtstoffschicht, die mindestens einen Leuchtstoff in Form von Leuchtstoffpunkten enthält, auf dem zweiten Substrat, mit einem dritten Substrat, das gegenüber dem zweiten Substrat angeordnet ist und mit dem zweiten Substrat zu einem gasdichten Gasentladungsgefäß, gefüllt mit einem Füllgas, verbunden ist und mit Mitteln zur Zündung und Aufrechterhaltung einer dielektrisch behinderten Entladung in dem Gasentladungsgefäß.

In dieser Kombination von transmittiven Flüssigkristallbildschirm mit einer Hintergrundbeleuchtung sind Flüssigkristallzelle und Beleuchtung zu einer Einheit integriert. Durch die dielektrisch behinderte Entladungen kann flächenhaft UV-Strahlung geeigneter Wellenlänge generiert werden. Außerdem kann die Leuchtstoffschicht in unmittelbarer Nähe zu den Flüssigkristallschaltelementen aufgebracht werden.

In diesem Flüssigkristallbildschirm werden nicht Farbfilter mittels Weißlicht beleuchtet, sondern Leuchtstoffe direkt selektiv angeregt. Dadurch ist die Lichtausbeute wesentlich verbessert. Durch die kompakte Bauweise ist dieser Flüssigkristallbildschirm besonders für Laptops geeignet.

Eine Hintergrundbeleuchtung mit einer dielektrisch behinderten Entladung kann ebenso wie dafür verwendeten UV-Leuchtstoffe eine Lebensdauer von 50 000 h erreichen.

Im Rahmen der vorliegenden Erfindung ist es bevorzugt, dass der Abstand d zwischen Leuchtstoffschicht und der Flüssigkristallschicht kleiner ist als der mittlere Radius der Leuchtstoffpunkte.

Im Rahmen der vorliegenden Erfindung kann es auch bevorzugt sein, dass das Füllgas ein Edelgas enthält. In dieser Ausführungsform ist die Absorption der durch die dielektrische Entladung erzeugte Strahlung zu vernachlässigen, weil sich kein absorbierender Festkörper zwischen dem Plasma und der Leuchtstoffschicht befindet und das gewählte Edelgas ebenfalls äußerst wenig UV-Stahlung absorbiert.

Es kann auch bevorzugt sein, dass das Füllgas einen Druck von 50mbar bis 10 bar hat. Für diese Ausführungsform kann auf druckfeste Behälter verzichtet werden, ohne das die Lichtausbeute beeinflußt wird.

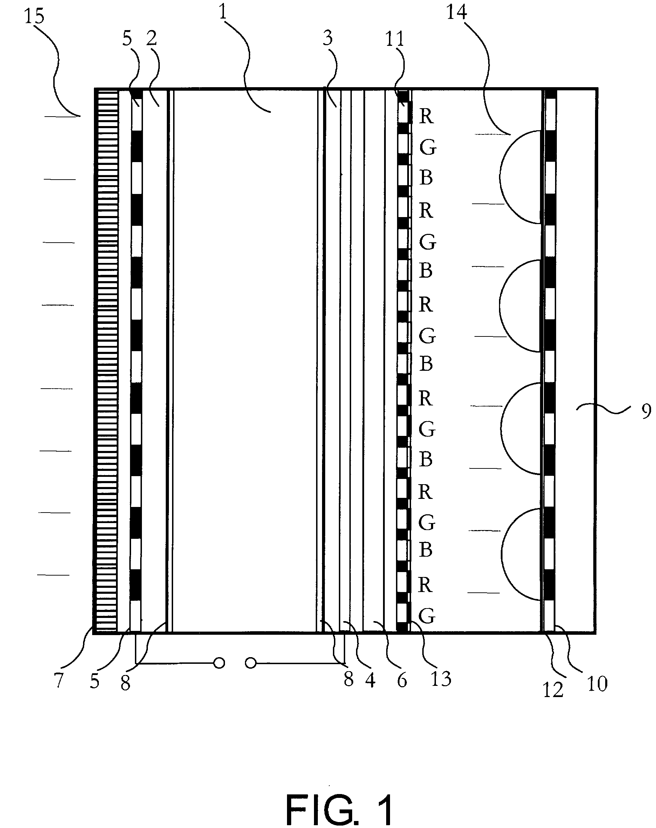

Nachfolgend wird die Erfindung anhand einer Figur weiter erläutert. Es zeigt schematisiert
- Fig 1: den Querschnitt einer Ausführungsform eines erfindungsgemäßen.
Flüssigkristallbildschirms.

Der in Fig. 1 gezeigte transmittive Flüssigkristallbildschirm weist eine ansteuerbare Flüssigkristallzelle auf. Er umfaßt weiterhin eine Hintergrundbeleuchtung mittels dielektrisch behinderter Entladung Flüssigkristallzelle und Hintergrundbeleuchtung sind zu einer kompakten Einheit integriert

Die Flüssigkristallzelle ist ausgerüstet mit einer Flüssigkristallschicht 1, zwei parallelen transparenten Substraten 2 und 3, die die Flüssigkristallschicht 1 flankieren und Mitteln zur Beeinflussung des Transmissionszustandes4 und 5 der Flüssigkristallschicht.

Der Grundkörper des Flüssigkristallzelle wird durch die beiden Substrate 2und 3 gebildet. Sie sind transparent für sichtbares Licht. Nach einer Ansführungsform der Erfindung können die beiden Substrate aus Glas oder einem transparenten Kunststoff bestehen. Diese Substrate sind optisch transparent, mindestens transluzent. Die Substrate sind an ihrer Peripherie mit einer Dichtung verschlossen. Die Substrate und die Dichtung schließen einen Raum ein, der durch die Flüssigkristallschicht gefüllt ist.

Für die Flüssigkristallschicht können verschiedene Flüssigkristallmaterialien gewählt werden. Zum Beispiel kann ein "twisted nematic"-Material mit einer Drehung von 90° für ein TN-LCD oder ein "super twisted nematic"-Material mit einer Drehung von 180 bis 270° für ein STN-LCD gewählt werden oder aber ein doppelbrechendes Material mit einer Drehung von 270° ("super twisted birefringence") für ein SBE-LCD. Auch ferroelektrische, smektische und cholesterische Flüssigkristallmaterialien können geeignet sein.

Hinsichtlich der Mittel, mit dem der Transmissionszustand der Flüssigkristallschicht beeinflusst werden kann, unterschiedet man zwischen einer Ansteuerung durch eine passive oder eine aktive Matrix. Bei Flüssigkristallbildschirmen mit aktiver Matrix (AM-LCD) ist jedem Bildelement (Pixel) ein eigener Schalter zugeordnet, der aus einem Dünnfilmtransistor (TFT) oder einer Dünnfilmdiode (TFD) bestehen kann. Auch die Ansteuerung durch Plasmaentladungen nach der PALC-Technologie gehört zu den Ansteuerungen durch eine Aktivmatrix und kann für die erfindungsgemäßen Flüssigkristallbildschirme verwendet werden. Flüssigkristallbildschirme mit aktiver Matrix zeigen insgesamt einen besseren Kontrast und höhere Farbsättigung und haben eine niedrigere Ansprechzeit.

Die Mehrzahl der derzeit weltweit produzierten Flüssigkristallbildschirme werden durch eine passive Matrix angesteuert. Wie in Fig 1 gezeigt, werden dafür die Oberflächen der beiden Substrate, die in Berührung mit der Flüssigkristallschicht stehen, mit zwei Elektrodenarrays aus transparenten, streifenförmigen Elektroden 4 und 5 beschichtet, die sich senkrecht überschneiden und eine Matrix von Schaltungspunkten bilden. Die Elektroden können zum Beispiel aus ITO bestehen. Die Elektroden sind mit einer Orientierungs-Schicht 8 aus orientiert abgeschiedenen (obliquely evaporated) Siliciumdioxid bedeckt. Weiterhin ist auf dem zweiten Substrat 3 ein Polarisator 6 und auf dem ersten Substrat 2 ein Analysator 7 angeordnet.

Zum Flüssigkristallbildschirm nach der Erfindung gehört weiterhin eine integrierte Hintergrundbeleuchtung Die Hintergrundbeleuchtung ist eine inkohärent emittierende Strahlungsquelle, die nach dem Prinzip der dielektrisch behinderten Entladung arbeitet.

Im einfachsten Fall ist für die Hintergrundbeleuchtung in Beobachtungsrichtung hinter dem zweiten Substrat 3 ein drittes Substrat 9 angeordnet. Das zweite und das dritte Substrat sind gasdicht miteinander verbunden. Dadurch wird ein gasdichtes Gefäß gebildet, das mit Füllgas gefüllt ist.

Das dritte Substrat 9 trägt an der Vorderseite ein drittes Elektrodenarray 10. Das dritte Elektrodenarray 10 besteht aus mindestens zwei nebeneinanderliegenden Elektroden, die voneinander und von dem Gasentladungsraum durch eine Schicht aus einem dielektrischem Material separiert sind Die Elektroden sind alternierend mit den Polen einer Spannungsquelle verbunden. Dadurch, das die Elektroden nebeneinander angeordnet sind, lassen sich flächenhafte Entladungskonfigurationen mit relativ flachen Entladungsgefäßen realisieren.

Durch geeignete Wahl der elektrischen Beschaltung lassen sich auch die Plasmaeigenschaften der Gasentladung beeinflussen. Schnelle Spannungsanstiege erhöhen die Homogenität des Plasmas und tragen somit zur Effizienzsteigerung bei. Die Frequenz bestimmt in gewissen Bereichen (Hz - kHz) die mittlere eingekoppelte Leistung, wodurch mit deren Wahl die Lichtleistung der Hintergrundbeleuchtung gesteuert werden kann.

In dem mit Füllgas gefüllten Gasentladungsraum wird das Plasma zur Lichterzeugung durch Gasentladung betrieben. Dazu werden die Elektroden an eine Wechselspannung in der Größenordnung von mehreren 100 V bis 20000V bei einer Frequenz im Bereich des technischen Wechselstroms bis zu einigen kHz angelegt. Es bildet sich eine elektrische Gleitentladung im wesentlichen im Bereich der Dielektrikumsoberfläche. Die Gasentladung erzeugt Strahlung im UV-Bereich des elektromagnetischen Spektrums. Die genaue Lage des erzeugten Wellenlängenbereichs ist durch .die Art des Füllgases, Gasdruck und Betriebstemperatur steuerbar.

Als Füllgas für den Gasentladungsraum, in dem das Plasma gezündet wird, kommen bevorzugt Edelgasgemische, insbesondere auch mit Beimischungen von Halogenen in Frage. Besonders Xe-haltige Gemische weisen einen hohen internen Plasmawirkungsgrad von bis zu 70 % auf Aber auch andere Gasgemische, die zB. Stickstoff, Sauerstoff, Wasser, Quecksilber, seltene Erden und Halogene enthalten, sind denkbar.

Der Gasfülldruck liegt bevorzugt zwischen 50 mbar und 10 bar, insbesondere bei Atmosphärendruck, um schwere Druckbehältnisse zu vermeiden.

Das zweite Substrat 3 ist auf der dem Betrachter zugewandten Seite auf der an die Flüssigkristallschicht angrenzenden Oberfläche oder bevorzugt auf der dem dritten Substrat zugewandten Oberfläche mit einer Leuchtstoffschicht 11 ausgestattet.

Die Leuchtstoffschicht ermöglicht eine Farbumwandlung des in der Plasmaentladung erzeugten UV-Lichtes 14 in sichtbares licht 15.

Die als Leuchtstoffe in Frage kommenden Materialien müssen die eintretende UV-Strahlung absorbieren und in einem geeigneten Wellenlängenbereich emittieren und eine hohe Fluoreszenzquantenausbeute erreichen. Als Leuchtstoffe sind im Prinzip alle für Leuchtstofflampen und Plasmabildschirme anwendbare Typen geeignet. Bevorzugt sind vor allem jene Leuchtstoffe, die spektral rein, d.h. in den drei Grundfarben Rot, Grün und Blau emittieren und die anregende UV-Wellenlänge gut absorbieren. Insbesondere Leuchtstoffe, die auch in Plasmabildschirmen Verwendung finden, können bevorzugt zusammen mit xenonhaltigen Gasgemischen zur Anwendung kommen. Als Beispiele seien BAM (BaMgAl₁₀O₁₇:Eu²⁺) für Blau, für Grün LAP (LaPO₄:Ce³⁺,Tb³⁺), Willemit, BAL:Mn, CBT ((Ce, Gd)MgB₅O₁₀:Tb), BAM green (BaMg₂Al₁₆O₂₇:Eu, Mn) oder andere Tb-haltige Leuchtstoffe (z. B. Y₂SiO₅:Tb³⁺) und für Rot (Y,Gd)BO₃:EU³⁺, Y(V,P,B)O₄:Eu³⁺ und YOX (Y₂O₃:Eu³⁺) genannt.

In der Leuchtstoffschicht 11 können die Bildpunkte in der üblichen Art und Weise als Punkte oder Streifen für das Farbtripel Rot, Grün, Blau aufgebracht werden.

Durch die zusätzliche Anwendung von weiteren Schichten mit unterschiedlichen Funktionen kann der Flüssigkristallbildschirm entscheidend verbessert werden.

Durch eine Schutzschicht 12 kann die Schicht aus einem dielektrischem Material, in der die Elektroden der Hintergrundbeleuchtung eingebettet sind, abgedeckt werden. Durch eine Schutzschicht 12 aus MgO, CaO, SrO, BaO, GdO, MgF₂, LiF, KCl, Mischungen aus diesen Substanzen oder sonstigen spurterresistenten Materialien mit hohem Sekundärelektronenkoeffizienten kann die Sputterresistenz erhöht und die zur Zündung notwendige Spannung erniedrigt werden.

Mittels (V)UV-reflekrierende bzw. -streuende Schichten können die rückwärts in Richtung Elektroden emittierte UV-Strahlung aus dem Gasentladungsraum ebenfalls genutzt werden. Denkbar sind Schichten aus AlonC (nanodisperses Aluminiumoxid), nano-SiO₂ oder andere (V)UV-streuende Materialien, aber auch Interferenzschichten aus UV-transparenten Materialien unterschiedlicher Brechungsindizes.

Es kann es nötig sein, UV-empfindliche Flüssigkristallmaterialien durch eine UV-absorbierende Schicht vor UV-Bestrahlung zu schützen. Dies kann aber auch durch geeignete Dimensionierung der sonstigen Schichten und Wahl des Füllgases, mit der die UV-Wellenlänge beeinflusst wird, vermieden werden.

Um eine Steigerung der Gesamteffizienz zu erreichen muß darauf geachtet werden, das der Abstand zwischen Leuchtstoff und Flüssigkristallschicht nicht zu groß wird.
Der Abstand sollte nicht großer als der Pixelradius sein. Ist diese Forderung nicht oder nur ungenügend zu erfüllen, können zusätzliche Schichtstrukturen angebracht werden, die das von den Leuchtstoffen emittierte Licht in Richtung Lichtventil bündeln z.B. durch Mikrolinsen.

Die Pixel können weiterhin durch eine schwarze Matrix 13 umrandet werden, um Kontrast und Farbreinheit zu verbessern.

Die Erfindung beinhaltet auch jede andere Schichtabfolge von Flüssigkristallschicht, der Elektrodenarrays für Hintergrundbeleuchtung und Flüssigkristallzelle, Polarisatoren und eventuellen Farbfiltern oder schwarzer Matrix, sofern sie den oben genannten Bedingungen genügt und die Funktion des transmittiven Flüssigkristallbildschirms gewahrt bleibt.

Wenn an die Elektroden der Hintergrundbeleuchtung Wechselstrom angelegt wird, steigt die Spannung und damit das Feld zwischen Anode und Kathode über die Zündbedingung an. Es kommt zum Durchbruch der Gasstrecke zwischen benachbarten Elektroden. Die hierbei erzeugten Ladungsträger sammeln sich auf den Oberflächen der dielektrischen Schicht an, so daß das innere elektrische Feld soweit geschwächt wird, das die Elektronenverluste, wie Anlagerung, den Elektronengewinn durch Ionisation überwiegen und die Entladung selbständig zum Erliegen kommt.

Die während dieser Entladungsphase erzeugten Elektronen nehmen im elektrischen Feld Energie auf, die sie in zumeist inelastischen Stößen an andere Gasteilchen abgeben. Bei geeigneter Wahl der Gaszusammensetzung strahlen diese Gasteilchen dann Licht der gewünschten Wellenlänge im UV-Bereich des elektromagnetischen Spektrums 14 aus.

Für den Betrieb der Flüssigkristallzelle wird entsprechend dem gewünschten Bild eine Spannung zwischen den beiden Elektrodenarrays angelegt. In dem Teil der Flüssigkristallschicht, der zwischen nicht geschalteten Schaltungspunken liegt, haben die Flüssigkristallmoleküle eine verdrillte Struktur mit einer Drehung von 90° über den Querschnitt der Zelle. In dem Teil der Flüssigkristallschicht, der zwischen geschalteten Schaltungspunken liegt, haben die Flüssigkristallmoleküle eine gestreckte Struktur ohne oder mit nur geringfügiger Drehung über den Querschnitt der Zelle.

Die UV-Strahlung 14, die von der Plasmaentladung erzeugt wird, trifft in der Leuchtstoffschicht auf einen roten, grünen oder blauen Bildpunkt. Die Bildpunkte in der Leuchtstoffschicht sind den Schaltungspunkten der Ansteuerung der Flüssigkristallzelle zugeordnet und an ihnen ausgerichtet. Die durch UV-Strahlung angeregten Leuchtstoffe strahlen dann sichtbares Licht in einer der Farben Rot, Grün oder Blau 15 aus Das farbige, sichtbare Licht durchquert an den Stellen in der Flüssigkristallschicht, an denen keine Spannung angelegt ist, den Polarisator, das Flüssigkristallmedium und den Analysator, um die gewünschte Bildinformation anzuzeigen.

## Patentansprüche

1. Flüssigkristallbildschirm, ausgerüstet mit einer Flüssigkristallschicht, mit einem ersten und einem zweiten transparenten Substrat, die die Flüssigkristallschicht flankieren, mit Mitteln zur Beeinflussung des Transmissionszustandes der Flüssigkristallschicht, mit einer Leuchtstoffschicht, die mindestens einen Leuchtstoff in Form von Leuchtstoffpunkten enthält, auf dem zweiten Substrat, mit einem dritten Substrat, das gegenüber dem zweiten Substrat angeordnet ist und mit dem zweiten Substrat zu einem gasdichten Gasentladungsgefäß, gefüllt mit einem Füllgas, verbunden ist und mit Mitteln zur Zündung und Aufrechterhaltung einer dielektrisch behinderten Entladung in dem Gasentladungsgefäß.

2. Flüssigkristallbildschirm, gemäß Anspruch 1,
**dadurch gekennzeichnet,**
**dass** der Abstand d zwischen Leuchtstoffschicht und der Flüssigkristallschicht kleiner ist als der mittlere Radius der Leuchtstoffpunkte.

3. Flüssigkristallbildschirm, gemäß Anspruch 1,
**dadurch gekennzeichnet,**
**dass** das Füllgas ein Edelgas enthält.

4. Flüssigkristallbildschirm, gemäß Anspruch 1,
**dadurch gekennzeichnet,**
**dass** das Füllgas einen Druck von 50mbar bis 10 bar hat.
